# EUROPEAN PATENT APPLICATION

(11) **EP 0 975 080 A2**
(43) Date of publication of application: **26.01.2000**
(21) Application number: 99660118.3
(22) Date of filing: 06.07.1999
(51) Int. Cl.: H02J 3/18

(54) **Discharge device**

(30) Priority: 07.07.1998 FI 981561
(71) Applicant: Nokian Kondensaattorit Oy, 33330 Tampere (FI)
(72) Inventor: Uitus, Osmo, 33920 Pirkkala (FI)
(74) Representative: Dahlström, Karl Krister

(57) **Abstract**

A discharge device for discharging a capacitor connection (C3, C4, C5) in a three-phase alternating current network when the capacitors are disconnected from the alternating current network. The discharge device (2) comprises a discharge member, switching member and control circuit (1), which controls the switching member so that it connects the discharge member with the capacitors (C3, C4, C5) after a delay from disconnection of the capacitor (C3, C4, C5) from the alternating current network. The discharge device (2) comprises a rectifier bridge (D1 to D6), the output voltage of which alternates. The control circuit (1) comprises a control member which can be controlled with the alternating output voltage of the rectifier bridge (D1 to D6).

## Description

The invention relates to a discharge device for discharging a capacitor used in an alternating current network when it is disconnected from the alternating current network, the discharge device comprising a discharge member, switching member and control circuit, which is arranged to control the switching member so that the switching member connects the discharge member with the capacitor after a delay from the moment the capacitor was disconnected from the alternating current network, and so that the switching member disconnects the discharge member from the capacitor after the capacitor has been discharged.

In this application the term 'high-power capacitor' refers to capacitors which are connected to the distribution network where alternating current is transmitted. In the technology related to distribution of electricity, high-power capacitors are used e.g. for reactive power compensation and for adjusting a suitable ratio of reactive power and active power, i.e. for adjusting the "power factor" of the distribution network. Furthermore, high-power capacitors are responsible for generating reactive power where it is needed, which allows to avoid unnecessary loading of the distribution network with transmission of reactive power.

The problems related to the use of high-power capacitors in distribution networks mainly occur when the capacitors are being connected and disconnected. For example, when a capacitor is connected, the voltage of the charged capacitor may differ from the current AC voltage in the network, which may cause voltage peaks in the distribution network, which in turn may risk network stability. The network may also be subjected to additional current peaks. Furthermore, the charge of the capacitor is still high after disconnection, and therefore it is very difficult and even dangerous to handle the capacitor. Different discharge resistor connections are used for discharging the charge because electrical safety regulations, for example, provide that high-power capacitors should be discharged after a certain period from disconnection from the network. Thus there will be no high momentary voltage differences between the capacitor and the distribution network during connection, and the network will not be subjected to high current peaks. Thanks to this the switching devices of the capacitor last longer.

A capacitor is typically discharged using a discharge resistor connected in parallel with the poles of the capacitor. The electrical safety regulations provide that capacitors should be discharged relatively soon after they have been disconnected from the network. Therefore the resistance of the discharge resistor has to be relatively low so that a short discharging time can be achieved. However, low parallel-connected resistance causes considerable power losses and heat production in normal use. If power losses are to be reduced, the resistance of the discharge resistor has to be higher, which may increase the discharging time more than the electrical safety regulations allow.

A capacitor can also be discharged by connecting the capacitor with a coil or a transformer, the impedance of which is high with the alternating current, but low with the direct current. In normal use the power losses will be small, but when the capacitor is disconnected, the discharging time is short. In order to make the impedance of the coil or transformer decrease quickly after disconnection, the coil or transformer has to be a component with an iron core which becomes saturated when disconnection is performed. However, it is expensive to produce coils or transformers with iron cores.

In a three-phase AC network, where the phases of the capacitor are connected either using a delta connection or a star connection, each phase is typically discharged by connecting a discharge device, preferably a discharge resistor, in parallel with each capacitor. By adjusting the resistance of the discharge resistors, the discharge resistor can be omitted from one phase circuit, in which case the high-power capacitors of three phases can be discharged with two discharge resistors. The above-mentioned problems of considerable power losses and heat production are also associated with this connection.

Finnish patent no. 94473 discloses a discharge device for discharging a capacitor in which a switching member is connected in series with a discharge resistor, the function of the switching member being controlled by a timer circuit. The timer circuit controls the switching member so that the switching member connects the discharge resistor in parallel with the capacitor after a certain delay from disconnection of the capacitor. Timing of the timer circuit can be implemented using a simple RC circuit, the time constant of which has been selected so that the time delay is substantially longer than the phase of the alternating current network. Thus the resistor does not unnecessarily consume energy when the capacitor is connected to the electric network. The resistance of the discharge resistor can be preferably adjusted so that it is low, and consequently the discharge time will be short. Such a discharge device is, however, intended only for discharging of high-power capacitors of a one-phase alternating current network. In the case of a three-phase network, each phase would have to be provided with a discharge device of its own. This would naturally increase the number of components as well as the costs.

An objective of the present invention is to provide a discharge device where the above-mentioned drawbacks are eliminated.

The discharge device of the invention is characterized in that the discharge device comprises a rectifier, the output voltage of which alternates when it is connected to an alternating current network, whereby the discharge device can be connected with capacitors connected to a three-phase alternating current network, the rectifier being arranged to supply voltage to a control circuit, which is arranged to control the switching member so that as the output voltage of the rectifier alternates or its value is substantially close to zero, the switching member disconnects the discharge device from the capacitors, and as the output voltage of the rectifier is direct voltage, the control circuit is arranged to control the switching member so that it connects the discharge device with the capacitor.

The basic idea of the invention is that the discharge device is connected to a three-phase alternating current network through a three-phase rectifier bridge, which allows one discharge device to discharge high-power capacitors of all three phases. A further idea of the invention is that the switching member of the discharge device connected to the three-phase alternating current network is controlled utilizing alternating output voltage of the rectifier bridge. In that case, when the capacitors are connected, the connecting member keeps the discharge member disconnected due to the voltage alternation, and when the capacitors are disconnected from the network, the switching member is subjected only to direct current and it connects the discharge member with the capacitors.

An advantage of the invention is that discharge is not switched on until after a moment from disconnection of the high-power capacitors from the alternating current network. In normal use, when the high-power capacitors are connected to the alternating current network, power losses and heat production can be minimized in the discharge device. On the other hand, when discharge is switched on, the impedance of the discharge device can be preferably adjusted so that it is suitably low, and consequently the high-power capacitors are discharged quickly. Thus the discharge device of the invention saves energy considerably. Compared to prior art discharge connections of high-power capacitors in three-phase alternating current networks, a further advantage of the invention is that even two discharge resistors can be omitted.

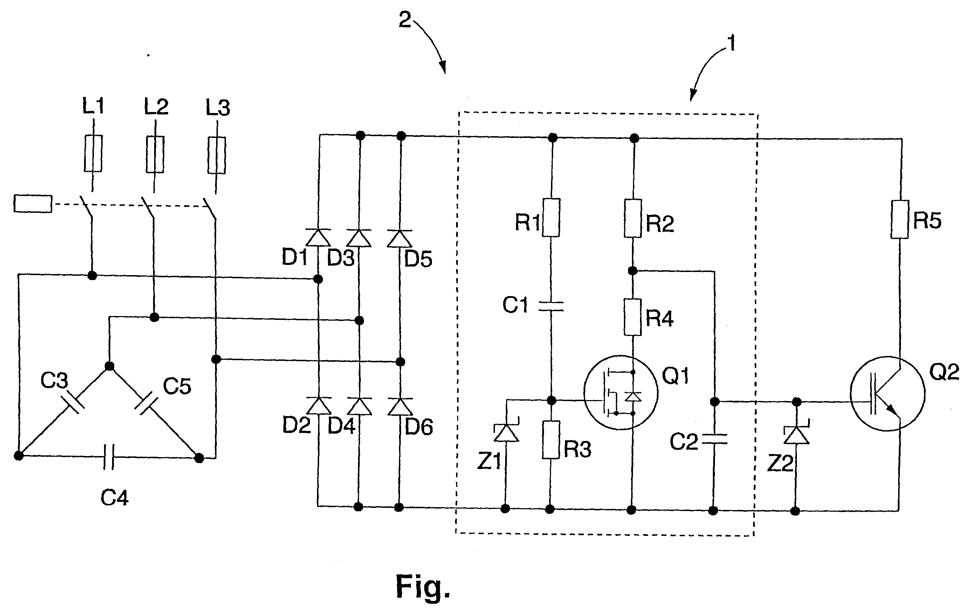

In the following, the invention will be described in greater detail with reference to the accompanying figure, which is an exemplary circuit diagram of a connection according to a preferred embodiment of the invention.

The figure illustrates an exemplary circuit diagram for implementing the discharge device of the invention. The discharge device 2 is connected with high-power capacitors C3, C4, C5 in a three-phase alternating current network through a three-phase full-wave rectifier included in the discharge device 2. The rectifier preferably comprises diodes D1 to D6. The discharge device 2 includes a discharge resistor R5 and a switching transistor Q2, preferably an IGBT (Insulated Gate Bipolar Transistor), which is connected in series with the resistor R5. The switching transistor Q2 is controlled by a control transistor Q1, which is preferably an FET (Field Effect Transistor). The drain of the control transistor Q1 is connected to the gate of the switching transistor Q2 through a resistor R4. There is a parallel-connected capacitor C2 and a zener diode Z2 between the gate and the emitter of the switching transistor Q2. The drain of the control transistor Q1 is also connected through the resistor R2 of the full-wave rectifier. The gate circuit of the control transistor Q1 also comprises a control capacitor C1, resistors R1 and R3 and a zener diode Z1.

When the high-power capacitors of the alternating current network are normally connected to the electrical network, the impedance of the discharge device is preferably high. This is achieved by preventing conduction of the switching transistor Q2. Rectified voltage is obtained for the gate of the control transistor Q1 from the full-wave rectifier, the voltage being slightly oscillating because of the three-phase network. For example, the voltage obtained from the rectifier in a three-phase network of 400 volts and 50 Hz oscillates at a frequency of about 300 Hz. When the rectifier is connected to the alternating current network, its output voltage alternates within a range which is substantially smaller than alternation of the maximum value of the voltage in the alternating current network. However, the voltage alternates so much that it alternately renders the control transistor Q1 to a conducting state and to a non-conducting state. When the control transistor Q1 is in the conducting state, it discharges the switching capacitor C2 connected to the transistor source. When the control transistor Q1 is in the non-conducting state, the selected time constant of the RC circuit formed by the resistor R2 and the switching capacitor C2 is preferably so high that there is no time to charge the switching capacitor C2 so much that the voltage at the gate of the switching transistor Q2 would rise to such an extent that the switching transistor Q2 would become conductive. Thus the switching transistor Q2 is not rendered to the conducting state when the high-power capacitors of the alternating current network are connected to the electric network.

When high-power capacitors C3, C4, C5 are disconnected from the electric network, the momentary voltage value of disconnection remains in the high-power capacitors C3, C4 and C5, and thus the control capacitor C1 is subjected to non-oscillating direct voltage. The control capacitor C1 also prevents supply of direct voltage to the gate of the control transistor Q1. In that case the control transistor Q1 is not rendered to the conducting state, and the voltage in the high-power capacitors C3, C4 and C5 starts to charge the switching capacitor C2 through the resistor R2. When the voltage over the switching capacitor C2, which is also supplied to the gate of the switching transistor Q2, achieves a sufficient value, the switching transistor Q2 starts to conduct, as a result of which the discharge resistor R5 is switched on. The resistance of the discharge resistor R5 is preferably adjusted so that it is sufficiently low, which allows to discharge the high-power capacitors C3, C4 and C5 quickly. When the high-power capacitors C3, C4 and C5 are discharged, the switching capacitor C2 also discharges, as a result of which the switching transistor Q2 opens. If the high-power capacitors C3, C4 and C5 are reconnected to the alternating current network before they are completely discharged, supply of oscillating rectified voltage to the control transistor Q1 starts, and thus the switching capacitor C2 discharges in the manner described above and the switching transistor Q2 opens, thus finishing discharging.

For the sake of clarity the components belonging to the control circuit 1 are encircled by a broken line in the figure. In the connection example illustrated in the figure the zener diodes Z1 and Z2 function as limiters, which prevent the gate voltages of the transistors Q1 and Q2 from increasing too much. The resistors R1 and R4 also function as protective resistors limiting the magnitude of current in the case of quick connections. The resistor R3 is responsible for discharging the gate voltage of the control transistor Q1 so that the control transistor Q1 can be rendered to the non-conducting state. The control capacitor C1 indicates whether the incoming voltage is direct voltage or rectified alternating voltage, i.e. whether the high-power capacitors C3, C4 and C5 are disconnected from or connected to the network.

The figure also exemplifies how the discharge device 2 of the invention can be connected to the three-phase alternating current network. The diodes D1 to D6 form a three-phase full-wave rectifier. The high-power capacitors C3, C4 and C5 are connected between the phases L1, L2 and L3 of the alternating current network using a delta connection. The high-power capacitors C3, C4 and C5 can also be connected using a star connection. Phase L1 is also connected to branch D1-D2 and phases L2 and L3 to branches D3-D4 and D5-D6, respectively.

The figure, the connection examples related to it and the descriptions are only intended to illustrate the inventive concept. The details of the invention may vary within the scope of the appended claims. It is obvious to a person skilled in the art that instead of the series-connected discharge resistor R5 and switching transistor Q2, a switching component having a sufficient internal resistance can be used alone as the resistor discharge member. Discharge can also be implemented by connecting a coil placed in a metal casing instead of the discharge resistor and by controlling the switching transistor with a high-frequency voltage. In that case the whirling currents directed to the metal casing consume energy and discharge the high-power capacitors quickly.

It is also clear to a person skilled in the art that instead of the FET, any connection or component implementing a corresponding control function can be used as the control transistor Q1, such as a bipolar transistor or an IGBT. For example, timer logic or a CMOS logic circuit can also be used as the control circuit 1. The switching transistor Q2 can be replaced with a corresponding switching member, such as an FET, bipolar transistor or thyristor. Rectification of the three-phase alternating current voltage can similarly be implemented using elements other than diodes, e.g. thyristors.

## Claims

1. A discharge device for discharging a capacitor (C3, C4, C5) used in an alternating current network when the capacitor is disconnected from the alternating current network, the discharge device (2) comprising a discharge member, switching member and control circuit (1), which is arranged to control the switching member so that the switching member connects the discharge member with the capacitor (C3, C4, C5) after a delay from the moment the capacitor (C3, C4, C5) was disconnected from the alternating current network, and so that the switching member disconnects the discharge member from the capacitor (C3, C4, C5) after the capacitor (C3, C4, C5) has been discharged, **characterized** in that the discharge device (2) comprises a rectifier, the output voltage of which alternates when it is connected to the alternating current network, whereby the discharge device (2) can be connected with the capacitors (C3, C4, C5) connected to the alternating current network, the rectifier being arranged to supply voltage to the control circuit (1), which is arranged to control the switching member so that as the output voltage of the rectifier alternates or its value is substantially close to zero, the switching member disconnects the discharge member from the capacitors (C3, C4, C5), and as the output voltage of the rectifier is direct voltage, the control circuit (1) is arranged to control the switching member so that it connects the discharge member with the capacitor (C3, C4, C5).

2. A discharge device according to claim 1, **characterized** in that the control circuit (1) comprises a control transistor (Q1), a control capacitor (C1) being connected to the gate of the transistor and a switching capacitor (C2) between the source and the drain of the control transistor (Q1), whereby the drain of the control transistor (Q1) is connected to the switching member, and as the voltage supplied from the rectifier alternates, the control transistor (Q1) is in a conducting state for so long a time that the voltage over the switching capacitor (C2) does not exceed a certain limit, and as the control circuit (1) is subjected to direct voltage, the control capacitor (C2) prevents supply of electric current to the gate of the control transistor (Q1), and the control transistor (Q1) is rendered to a non-conducting state, thus allowing the voltage of the switching capacitor (C2) to rise to such an extent that the switching member connects the discharge member with the capacitors (C3, C4, C5).

3. A discharge device according to claim 2, **characterized** in that the control transistor (Q1) is an FET.

4. A discharge device according to any one of the preceding claims, **characterized** in that the discharge member is a resistor (R5).

5. A discharge device according to any one of the preceding claims, **characterized** in that the switching member is a switching transistor (Q2).

6. A discharge device according to claim 5, **characterized** in that the switching transistor (Q2) is an IGBT.

7. A discharge device according to any one of the preceding claims, **characterized** in that the rectifier is a rectifier bridge consisting of diodes (D1 to D6).
